# EUROPEAN PATENT APPLICATION

(11) **EP 4 582 386 A1**
(43) Date of publication of application: **09.07.2025**
(21) Application number: 22957419.9
(22) Date of filing: 31.08.2022
(51) Int. Cl.: C01G 39/06, B82Y 30/00, B82Y 40/00, C01B 32/19

(54) **LAYERED MATERIAL NANOSHEET PRODUCTION METHOD, LAYERED MOS2 NANOSHEET, AND LAYERED GRAPHITE NANOSHEET**

(71) Applicant: Tohoku University, Sendai-shi, Miyagi 980-8577 (JP)
(72) Inventor: HAYASHI, Yamato, Sendai-shi, Miyagi 980-8577 (JP); TAKIZAWA, Hirotsugu, Sendai-shi, Miyagi 980-8577 (JP); ISHII, Daigo, Sendai-shi, Miyagi 980-8577 (JP); EBATO, Yusuke, Sendai-shi, Miyagi 980-8577 (JP); SAWAGUCHI, Kyosuke, Sendai-shi, Miyagi 980-8577 (JP)
(74) Representative: Plasseraud IP
(86) International application number: PCT/JP2022/032879
(87) International publication number: WO 2024/047822

(57) **Abstract**

A layered material nanosheet production method includes an exfoliation step of exfoliating layered material particles in layers by irradiating the layered material particles with a microwave while cooling the layered material particles.

## Description

### Technical Field

The present invention relates to a layered material nanosheet production method, a layered MoS₂ nanosheet, and a layered graphite nanosheet.

### Background Art

It is known that a characteristic of layered materials represented by molybdenum sulfide (MoS₂) and graphite can be greatly changed by forming them into thin nanosheets with a thickness of nanometers, which are obtained by depositing one or more unit layers. Therefore, nanosheets of layered materials have attracted attention as novel materials.

As a layered material nanosheet production method, a bottom-up method such as a chemical vapor deposition (CVD) method or a physical vapor deposition (PVD) method and a top-down method represented by an exfoliation method have been known. The exfoliation method is a method of exfoliating a part of layered material particles of a raw material between layers. As the exfoliation method, mechanical exfoliation of exfoliating a layered material using a Scotch tape and liquid phase exfoliation of exfoliating a layered material in a liquid phase have been known. In the liquid phase exfoliation, in order to facilitate exfoliation of the layered material, it has been studied to insert alkali metal ions or ammonium ions between layers of the layered material to spread the layers (PTL 1).

### Citation List

### Patent Literature

PTL 1: JP2019-73401A

### Summary of Invention

### Technical Problem

The liquid phase exfoliation is an industrially advantageous method because it is scalable and allows for mass production as compared with the CVD method and the mechanical exfoliation. However, when alkali metal ions or ammonium ions are inserted between the layers of the layered material, it may be necessary to wash and remove ions remaining between the layers of the obtained layered material nanosheet. In addition, the ease of exfoliation of the layered material is different between a portion where ions are inserted and a portion where ions are not inserted between the layers of the layered material, and thus the exfoliation of the layered material proceeds non-uniformly, and the obtained layered material nanosheet tends to be fine and have low orientation.

The present invention has been made in view of the above problems, and an object thereof is to provide a layered material nanosheet such as a layered MoS₂ nanosheet or a layered graphite nanosheet having a small amount of residues between layers and a high orientation, and a layered material nanosheet production method.

### Solution to Problem

The present inventors have found that, by irradiating layered material particles with a microwave while cooling the layered material particles, the layered material particles can be relatively easily exfoliated in layers without inserting alkali metal ions or ammonium ions between the layers. The present inventors have confirmed that the obtained layered material nanosheet was excellent in orientation, and have completed the present invention.

Therefore, the present invention has the following aspects.

[1] A layered material nanosheet production method including an exfoliation step of exfoliating layered material particles in layers by irradiating the layered material particles with a microwave while cooling the layered material particles.
[2] The layered material nanosheet production method according to claim 1, further including a dispersion step of dispersing the layered material particles in a polar solvent, in which in the exfoliation step, the layered material particles are irradiated with the microwave while cooling the layered material particles by solidifying the polar solvent, thereby exfoliating the layered material particles in layers.
[3] The layered material nanosheet production method according to the above [1], further including a dispersion step of dispersing the layered material particles in a nonpolar solvent, in which in the exfoliation step, the layered material particles are irradiated with the microwave while cooling the layered material particles by cooling the nonpolar solvent to 10°C or lower, thereby exfoliating the layered material particles in layers.
[4] The layered material nanosheet production method according to any one of the above [1] to [3], in which the layered material particles are intermittently irradiated with the microwave.
[5] The layered material nanosheet production method according to any one of the above [1] to [4], in which the layered material particles include at least one particle selected from the group consisting of transition metal chalcogenide particles, molybdenum tungsten particles, and layered carbon particles.
[6] The layered material nanosheet production method according to any one of the above [1] to [5], in which the layered material particle has a cleavage surface, and a major axis of the cleavage surface is 10 µm or more.
[7] A layered MoS₂ nanosheet including MoS₂, in which a ratio I₀₀₂/I₁₀₃ of an X-ray diffraction peak intensity I₀₀₂ of a (002) plane to an X-ray diffraction peak intensity I₁₀₃ of a (103) plane of the MoS₂ is 5 or more.
[8] A layered graphite nanosheet obtained by exfoliating layered carbon particles in layers, in which a rate of change in a D/G ratio, which is a ratio of an intensity D of a D band to an intensity G of a G band in a Raman spectrum, is 5% or more, as calculated according to the following formula (1): rate of change in D/G ratio = {absolute value of (D/G ratio of layered carbon particles - D/G ratio of layered graphite nanosheet)/D/G ratio of layered carbon particles} × 100 (1).
[9] A layered graphite nanosheet obtained by exfoliating layered carbon particles in layers, in which
   a rate of change in a G/2D ratio, which is a ratio of an intensity G of a G band to an intensity 2D of a 2D band in a Raman spectrum, is 2% or more, as calculated according to the following formula (2): rate of change in G/2D ratio = {absolute value of (D/G ratio of layered carbon particles - D/G ratio of layered graphite nanosheet)/D/G ratio of layered carbon particles} × 100 (2).

### Advantageous Effects of Invention

The present invention can provide a layered material nanosheet such as a layered MoS₂ nanosheet or a layered graphite nanosheet having a small amount of residues between layers and high orientation, and a layered material nanosheet production method.

### Brief Description of Drawings

[FIG. 1] FIG. 1 is a perspective view of a layered material nanosheet obtained by a layered material nanosheet production method according to an embodiment of the present invention.
[FIG. 2] FIG. 2 is a configuration diagram of an example of a reaction device that can be used in the layered material nanosheet production method according to the embodiment of the present invention.
[FIG. 3] FIG. 3 is a configuration diagram of another example of a reaction device that can be used in the layered material nanosheet production method according to the embodiment of the present invention.
[FIG. 4] FIG. 4 shows temperature profiles of frozen MoS₂ suspensions during irradiation with a microwave in Experimental Examples A1 to A10.
[FIG. 5] FIG. 5 is an FE-SEM photograph of layered MoS₂ nanosheets obtained in Experimental Example A2 and Experimental Example A6 and MoS₂ particles before an exfoliation treatment.
[FIG. 6] FIG. 6 is an X-ray diffraction pattern of MoS₂ particles before the exfoliation treatment that are used in Experimental Examples A1 to A10.
[FIG. 7] FIG. 7 is an X-ray diffraction pattern of MoS₂ nanosheets obtained in Experimental Examples A1 to A10.
[FIG. 8] FIG. 8 is an FE-SEM photograph of a layered graphite nanosheet obtained in Experimental Example B1 and graphite particles before the exfoliation treatment.
[FIG. 9] FIG. 9 is a Raman spectrum of the layered graphite nanosheet obtained in Experimental Example B1 and the graphite particles before the exfoliation treatment.
[FIG. 10] FIG. 10 is a graph showing a temperature change of frozen liquids obtained in Experimental Examples C1 to C9 from irradiation with a microwave until a fiber optic thermometer shows 20°C.
[FIG. 11] FIG. 11 is a graph showing a temperature change of frozen liquids obtained in Experimental Examples C10 to C18 from irradiation with a microwave until the fiber optic thermometer shows 20°C.

### Description of Embodiments

Hereinafter, the present embodiment will be described in detail with reference to the drawings appropriately. The drawings used in the following description may show feature portions in an enlarged manner for convenience in order to make features of the invention easier to be understood, and dimensional ratios of components may be different from actual ones. A material, a dimension, and the like exemplified in the following description are merely examples, and the present invention is not limited thereto, and can be appropriately modified and implemented without departing from the gist of the present invention.

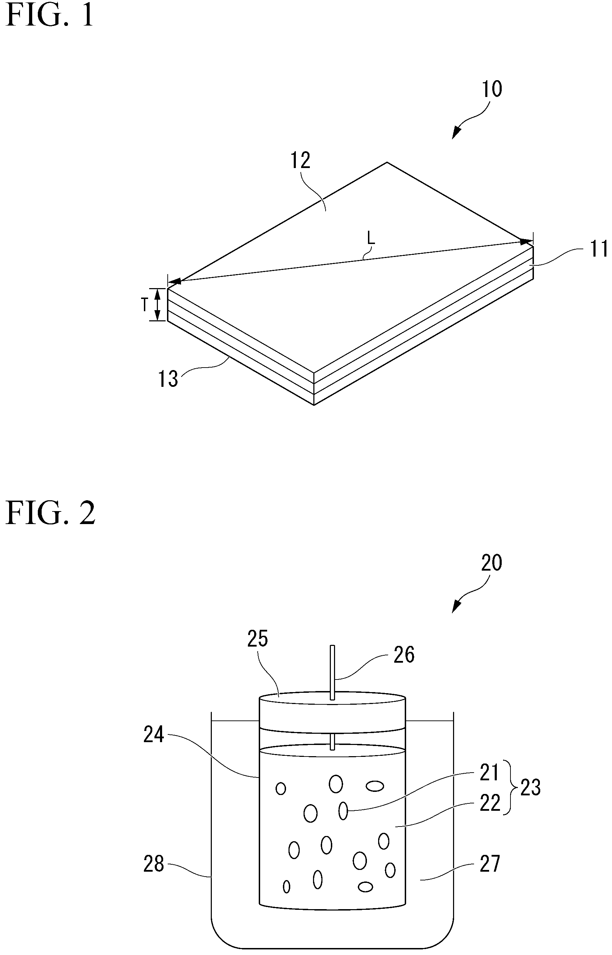

FIG. 1 is a perspective view of a layered material nanosheet obtained by a layered material nanosheet production method according to an embodiment of the present invention.

A layered material nanosheet 10 shown in FIG. 1 is a stacked body in which unit layers 11 are stacked. The unit layer 11 is formed by bonding atoms forming the layered material with a strong bond such as a covalent bond or an ionic bond. The unit layers 11 are stacked by a weak bond such as van der Waals force. Therefore, the layered material nanosheet 10 has a characteristic (cleavage property) in which a crack occurs in a direction along a surface of the unit layer 11 between the unit layers 11 and a part of the layered material is exfoliated.

The layered material nanosheet 10 has upper and lower surfaces 12, 13. At least one of the upper and lower surfaces 12, 13 of the layered material nanosheet is an exfoliation surface. The exfoliation surface means a surface obtained by exfoliation from the layered material particles (non-sheet-shaped layered material particles) of the raw material. The exfoliation surface may have a step formed by partial exfoliation of the unit layer 11.

A shape of the layered material nanosheet 10 is a rectangular shape, and the shape of the layered material nanosheet 10 is not particularly limited. The shape of the layered material nanosheet 10 may be, for example, a disk shape, a polygonal shape, and a scale shape.

The average of thicknesses (T in FIG. 1) of the layered material nanosheets 10 is in a range of 2 nm or more and 10 nm or less. The size of the surfaces 12, 13 of the layered material nanosheet 10 is not particularly limited. The average of the maximum diameters (L in FIG. 1) of the surfaces 12, 13 may be, for example, in a range of 100 nm or more and 100 mm or less. The average thickness and the average maximum diameter of the layered material nanosheets 10 are average values of the thicknesses and the maximum diameters of 100 layered material nanosheets 10 measured using a field emission scanning electron microscope (FE-SEM).

Alkali metal ions and ammonium ions are not contained or substantially not contained between the unit layers 11 in the layered material nanosheet 10.

As a material of the layered material nanosheet 10, for example, layered carbon particles, hexagonal boron nitride (h-BN), a transition metal chalcogenide (TMDC), a metal halide, a transition metal oxide, a titanium oxide-based compound, or molybdenum tungsten (MoW) can be used. Examples of the layered carbon particles include graphite and expanded graphite. Examples of the transition metal chalcogenide include HfS₂, MoS₂, NiTe₂, PtSe₂, and ZrS₂. Examples of the metal halide include MgBr₂, CdI₂, AsI₃, VI₃, SrFCl, PbFI, and Ag₂F. The layered material nanosheet 10 is typically a layered MoS₂ nanosheet or a layered graphite nanosheet.

In the MoS₂-containing layered material nanosheet 10 (layered MoS₂ nanosheet), a ratio I₀₀₂/I₁₀₃ of an X-ray diffraction peak intensity I₀₀₂ of a (002) plane to an X-ray diffraction peak intensity I₁₀₃ of a (103) plane of MoS₂ may be 5 or more. The X-ray diffraction peak of the (002) plane of MoS₂ is derived from the unit layer 11 of MoS₂. The X-ray diffraction peak of the (103) plane of MoS₂ is derived from the stacked structure of the unit layer 11. As the exfoliation of MoS₂ progresses and the thickness of the layered material nanosheet 10 decreases, the intensity of the X-ray diffraction peak of the (103) plane relatively decreases, and the X-ray diffraction peak of the (002) plane relatively increases, so that the ratio I₀₀₂/I₁₀₃ increases, and the orientation of the layered material nanosheet 10 increases. The ratio I₀₀₂/I₁₀₃ may be 1 or more, or may be 10 or more. The ratio I₀₀₂/I₁₀₃ may be 300 or less, or may be 200 or less.

When the layered material nanosheet 10 is a layered graphite nanosheet in which layered carbon particles are exfoliated in layers, the rate of change in a D/G ratio, which is a ratio of an intensity D of a D band to an intensity G of a G band in a Raman spectrum, calculated according to the following formula (1) may be 5% or more. Rate of change in D/G ratio = {absolute value of (D/G ratio of layered carbon particles - D/G ratio of layered graphite nanosheet)/D/G ratio of layered carbon particles} × 100 (1)

The G band (1580 cm⁻¹ to 1600 cm⁻¹) of graphite is a signal commonly observed in sp²-bonded carbon skeletons, and the band of the D band (2680 cm⁻¹ to 2700 cm⁻¹) appears due to structure defects. Therefore, the rate of change in the D/G ratio is a measure representing the change in the defect amount and the change in fragmentation of the unit layer 11 caused by the layered carbon particles exfoliating in layers. The rate of change in the D/G ratio may be 1% or more, or may be 10% or more. The rate of change in the D/G ratio may be 300% or less, or may be 200% or less.

In addition, in the case of a layered graphite nanosheet, the rate of change in a G/2D ratio, which is a ratio of the intensity G of the G band to an intensity 2D of a 2D band in the Raman spectrum, calculated according to the following formula (2) may be 2% or more. Rate of change in G/2D ratio = {absolute value of (D/G ratio of layered carbon particles - D/G ratio of layered graphite nanosheet)/D/G ratio of layered carbon particles} × 100 (2)

The 2D band (2680 cm⁻¹ to 2700 cm⁻¹) of graphite indicates the number of graphite layers. Therefore, the rate of change in G/2D is a measure representing a stacked state of the graphite layers of the unit layer 11. The rate of change in the G/2D ratio may be 1% or more, or may be 10% or more. The rate of change in the G/2D ratio may be 300% or less, or may be 200% or less.

In the layered graphite nanosheet, one of the rate of change in the D/G ratio and the rate of change in the G/2D ratio may be 1% or more, or both may be 1% or more.

The layered material nanosheet 10 according to the present embodiment configured as described above has an exfoliation surface and is obtained by an exfoliation method, and thus can be industrially advantageously produced. In addition, the layered material nanosheet according to the present embodiment does not substantially contain alkali metal ions and ammonium ions between the unit layers 11, and thus it is not required to remove ions by washing.

When the layered material nanosheet 10 according to the present embodiment is a layered MoS₂ nanosheet containing MoS₂, and the ratio I₀₀₂/I₁₀₃ of the X-ray diffraction peak intensity I₀₀₂ of the (002) plane to the X-ray diffraction peak intensity I₁₀₃ of the (103) plane of MoS₂ is 5 or more, the orientation is high, and thus the characteristics such as electrical conductivity and thermal conductivity greatly fluctuate as compared with the non-sheet-shaped MoS₂ particles. Therefore, the layered material nanosheet can be used as a novel material.

When the layered material nanosheet 10 according to the present embodiment is a layered graphite nanosheet in which layered carbon particles are exfoliated in layers, and the rate of change in the D/G ratio calculated according to the above formula (1) is 5% or more, the change in the defect amount and the change in fragmentation of the unit layer 11 are large for the layered carbon particles of the raw material, and thus the characteristics such as electrical conductivity and thermal conductivity greatly fluctuate as compared with the non-sheet-shaped layered carbon particles. Therefore, the layered material nanosheet can be used as a novel material.

Further, when the layered material nanosheet 10 according to the present embodiment is a layered graphite nanosheet in which the layered carbon particles are exfoliated in layers, and the rate of change in the G/2D ratio calculated according to the above formula (2) is 2% or more, the change in a layered state of the graphite layer of the unit layer 11 is large, and thus the characteristics such as electrical and thermal conductivity greatly fluctuate as compared with the non-sheet-shaped layered carbon particles. Therefore, the layered material nanosheet can be used as a novel material.

Next, a layered material nanosheet production method according to the present embodiment will be described.

The layered material nanosheet production method according to the present embodiment includes a cooling step and an exfoliation step.

In the cooling step, the layered material particles of the raw material are cooled. The layered material particles of the raw material may be cooled by using, for example, a nonpolar solvent or a polar solvent as a cooling medium. That is, the layered material particles may be cooled by dispersing the layered material particles in a nonpolar solvent or a solid polar solvent and cooling the thus-obtained dispersion. The nonpolar solvent may be a solid or a liquid. The nonpolar solvent and the solid polar solvent as the cooling medium may be cooled to, for example, 10°C or lower. The nonpolar solvent may have polarity as long as it does not generate heat when irradiated with microwaves. As the nonpolar solvent, for example, silicone oil, hexane, and toluene can be used. When the polar solvent is used as the cooling medium, the cooling may be performed by dispersing the layered material particles in the polar solvent, and cooling and solidifying (freezing) the obtained dispersion. As the polar solvent, for example, water, an organic solvent (alcohol, ketone), or a mixed solution of water and an organic solvent can be used. Examples of the alcohol include methanol, ethanol, and 1-propanol. Examples of the ketone include acetaldehyde, acetone, acrolein, benzaldehyde, butylaldehyde, formaldehyde, and propionaldehyde. The concentration of the organic solvent in the mixed solution of water and the organic solvent is, for example, in a range of 0.1 vol% or more and 20 vol% or less, and preferably in a range of 0.5 vol% or more and 5.0 vol% or less.

The layered material particles of the raw material are not particularly limited, and examples thereof include layered carbon particles, hexagonal boron nitride (h-BN), a transition metal chalcogenide (TMDC), a metal halide, a transition metal oxide, a titanium oxide-based compound, and molybdenum tungsten (MoW). Examples of the layered carbon particles include graphite and expanded graphite. Examples of the transition metal chalcogenide include HfS₂, MoS₂, NiTe₂, PtSe₂, and ZrS₂. Examples of the metal halide include MgBr₂, CdI₂, AsI₃, VI₃, SrFCl, PbFI, and Ag₂F. The layered material particles are typically MoS₂ or graphite.

In the exfoliation step, the layered material particles cooled in the cooling step are irradiated with a microwave while being cooled, and the layered material particles are exfoliated in layers. The microwave is an electromagnetic wave having a frequency in a range of 300 MHz to 300 GHz. A material having polarity self-generates heat by absorbing the microwave. The layered material has a stacked structure obtained by stacking the unit layers 11 and has polarity, and therefore, the layered material generates heat by being irradiated with the microwave. The nonpolar solvent does not generate heat even when irradiated with the microwave because the nonpolar solvent has no polarity. In addition, molecules of the polar solvent in a solid state are unlikely to rotate or vibrate, and thus the polar solvent does not generate heat even when irradiated with the microwave. Therefore, the layered material particles can be selectively heated by emitting the microwave in a state where the layered material particles are dispersed in a nonpolar solvent or a solid polar solvent. Further, the layered material particles selfgenerate heat with the microwave, and thus the layered material particles can be uniformly and rapidly heated as compared with a case where heat is applied from the outside. On the other hand, the layered material particles are cooled from the outside via the cooling medium, and thus a temperature distribution is generated inside the layered material particles by cooling and heating. When the temperature distribution is generated, thermal stress is impulsively applied to the inside of the layered material particles, cracks are generated between the unit layers of the layered material particles by the thermal stress, and the layered material particles are exfoliated in layers.

The irradiation of the layered material particles with the microwave may be performed continuously or intermittently. In the case of intermittent irradiation, the microwave irradiation time may be in a range of 1 s to 10 s, and the microwave non-irradiation time may be in a range of 1 s to 10 s. The duty may be in a range of 30% or more and 70% or less.

FIG. 2 is a configuration diagram of an example of a reaction device that can be used in the layered material nanosheet production method according to the embodiment of the present invention.

A reaction device 20 shown in FIG. 2 includes a reaction vessel 24 and a cooler 28. The reaction vessel 24 contains a frozen suspension 23 in which layered material particles 21 are dispersed in a solid polar solvent 22. The solid polar solvent 22 is, for example, ice. The frozen suspension 23 can be prepared, for example, by charging the layered material particles 21 and the polar solvent 22 into the reaction vessel 24, performing a dispersion treatment by an ultrasonic wave treatment or the like, and then performing cooling. The cooler 28 contains a coolant 27. The coolant 27 is, for example, dry ice. The dry ice sublimates at -79°C, and does not absorb microwaves because carbon dioxide as a raw material is a nonpolar material. A lid 25 of the reaction vessel 24 is equipped with a fiber optic thermometer 26. The fiber optic thermometer 26 measures the temperature of the frozen suspension 23. When the polar solvent is dissolved into a liquid, the temperature is rapidly increased by the irradiation with the microwave. Therefore, it is preferable to emit the microwave so that the temperature of the frozen suspension 23 is a temperature of the melting point of the polar solvent 22 minus 30°C, or lower.

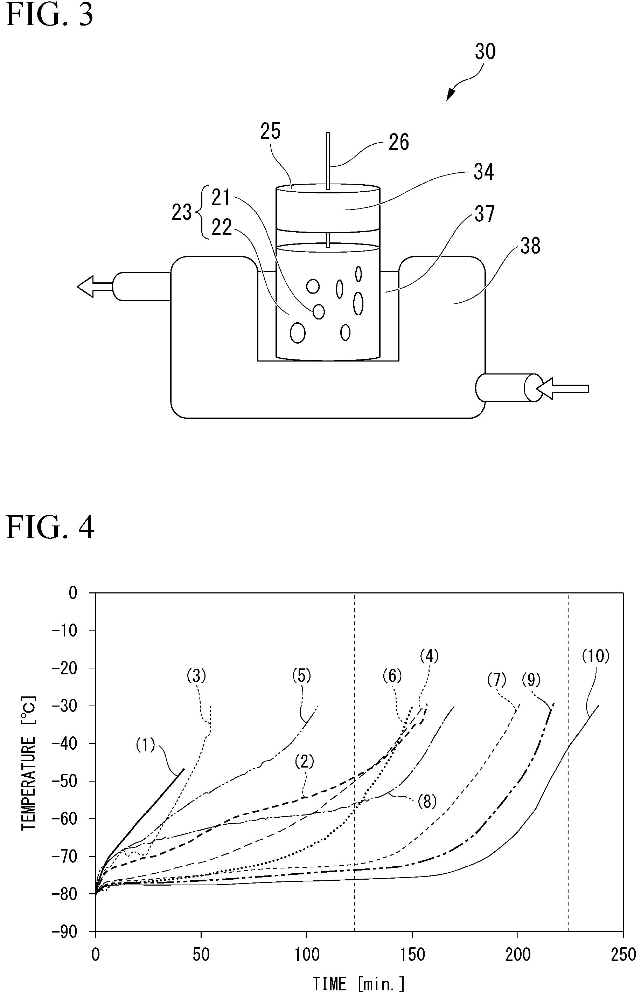

FIG. 3 is a configuration diagram of another example of the reaction device that can be used in the layered material nanosheet production method according to the embodiment of the present invention.

A reaction device 30 shown in FIG. 3 is the same as the reaction device 20 shown in FIG. 2 except that a nonpolar solvent is used as a coolant 37 and a circulating cooler 38 in which a cooling liquid circulates is used as a cooler, and thus, common parts are denoted by the same reference numerals and description thereof will be omitted.

The nonpolar solvent as the coolant 37 is, for example, silicone oil. Silicone oil does not absorb microwaves because the silicone oil is a nonpolar solvent. The cooling liquid circulating inside the circulating cooler 38 is, for example, silicone oil. In the reaction device 30 shown in FIG. 3, a suspension obtained by dispersing the layered material particles 21 in a nonpolar solvent may be used instead of the frozen suspension 23. In this case, for example, silicone oil can be used as the nonpolar solvent of the suspension.

According to the layered material nanosheet production method of the present embodiment configured as described above, the layered material particles are exfoliated in layers using thermal stress generated inside the layered material particles by irradiating the layered material particles with the microwave while cooling the layered material particles. Therefore, it is not necessary to insert alkali metal ions or ammonium ions between the layers of the layered material to spread the space between the layers. Therefore, it is not necessary to wash and remove ions remaining between the layers of the obtained layered material nanosheet. Further, the layered material particles are heated by irradiation with the microwave, and thus the layered material particles are uniformly heated. Accordingly, the thermal stress generated inside the layered material particles becomes uniform, and thus a layered material nanosheet having a large unit layer size and high orientation can be obtained.

In the layered material nanosheet production method according to the present embodiment, in the cooling step, the layered material particles are dispersed in the nonpolar solvent or the solid polar solvent cooled to 10°C or lower, and thus the layered material particles can be uniformly cooled. Accordingly, when the layered material particles are heated, the thermal stress generated inside the layered material particles becomes more uniform. Therefore, a layered material nanosheet having a larger unit layer size and higher orientation can be obtained.

In addition, according to the layered material nanosheet production method of the present embodiment, the temperature difference of the layered material particles between the time of irradiation with microwaves and the time of irradiation stop can be increased by intermittently irradiating the layered material particles with microwaves to heat the layered material particles in the exfoliation step. Accordingly, the thermal stress generated inside the layered material particle can be further increased. Therefore, the exfoliation of the layered material easily proceeds, and the production rate of the layered compound nanosheet can be increased.

Although one embodiment of the present invention has been described above, the present invention is not limited thereto, and can be appropriately changed without departing from the technical idea of the present invention.

For example, the cooling step is performed before the exfoliation step in the layered material nanosheet production method according to the present embodiment, but the present invention is not limited thereto. The layered material particles may be exfoliated in layers by irradiating the layered material particles with microwaves while cooling the layered material particles without performing the cooling step.

### Examples

Next, the results of experimental examples performed to confirm the effects of the present invention will be described. The present invention is not limited to the following examples.

### <Experimental Example A: Layered MoS₂ Nanosheet>

### [Experimental Example A1]

Into a plastic bottle (polyethylene bottle) having a capacity of 100 mL were charged 0.5 g of MoS₂ particles (average particle diameter: 50 µm) and 100 mL of pure water, followed by dispersing by irradiation with ultrasonic waves (50 kHz, 100 W) for 10 minutes, and a MoS₂ suspension was obtained. A fiber optic thermometer was inserted into a central portion of the obtained MoS₂ suspension, then the plastic bottle was produced in liquid nitrogen to rapidly cool the MoS₂ suspension, and a frozen MoS₂ suspension was produced. The cooling with liquid nitrogen was performed until the temperature of the central portion of the frozen MoS₂ suspension became -100°C or lower. Thereafter, the plastic bottle in which the frozen MoS₂ suspension was produced was placed in a polyethylene cooling container having a capacity of 500 mL and having a bottom surface on which dry ice having a thickness of 10 mm was placed, and 400 g of dry ice powder was filled between an outer periphery of the plastic bottle and an inner periphery of the polyethylene cooling container.

The plastic bottle and the polyethylene cooling container were placed on a sample stage for irradiation with microwaves, and the irradiation of the frozen MoS₂ suspension with microwaves was started at a time point when the temperature of the central portion of the frozen MoS₂ suspension in the plastic bottle reached -80°C. Then, the irradiation with microwaves was ended at a time point when the temperature of the central portion of the frozen MoS₂ suspension reached -30°C. The irradiation with microwaves was performed in a multi-mode of 2.45 GHz. The output of microwaves was 500 W, and the irradiation condition was continuous irradiation. In this way, the MoS₂ particles were subjected to an exfoliation treatment to produce a MoS₂ nanosheet.

After the exfoliation treatment, the plastic bottle was taken out from the polyethylene cooling container, and the frozen MoS₂ suspension was heated and dissolved in a thermostatic bath. The obtained MoS₂ suspension was filtered to collect the MoS₂ nanosheet.

### [Experimental Examples A2 to A10]

MoS₂ nanosheets were produced by performing an exfoliation treatment until the temperature of the central portion of the frozen MoS₂ suspension reached -30°C in the same manner as in Experimental Example A1 except that the output of the microwaves with which the frozen MoS₂ suspension was irradiated and the irradiation conditions were set to the conditions described in Table 1 below. In the irradiation conditions, the term "continuous" means that the frozen MoS₂ suspension is continuously irradiated with microwaves, and the term "intermittent" means that a cycle of irradiating the MoS₂ suspension with microwaves for a predetermined irradiation time and then stopping the irradiation with microwaves for a predetermined stop time is repeated.

**[Table 1]**

| | Output (W) | Irradiation conditions |
|---|---|---|
| Experimental Example A1 | 500 | Continuous |
| Experimental Example A2 | 250 | Continuous |
| Experimental Example A3 | 500 | Intermittent (irradiation time: 7.5 s, stop time: 2.5 s) |
| Experimental Example A4 | 250 | Intermittent (irradiation time: 7.5 s, stop time: 2.5 s) |
| Experimental Example A5 | 750 | Intermittent (irradiation time: 5.0 s, stop time: 5.0 s) |
| Experimental Example A6 | 500 | Intermittent (irradiation time: 5.0 s, stop time: 5.0 s) |
| Experimental Example A7 | 250 | Intermittent (irradiation time: 5.0 s, stop time: 5.0 s) |
| Experimental Example A8 | 750 | Intermittent (irradiation time: 2.5 s, stop time: 7.5 s) |
| Experimental Example A9 | 500 | Intermittent (irradiation time: 2.5 s, stop time: 7.5 s) |
| Experimental Example A10 | 250 | Intermittent (irradiation time: 2.5 s, stop time: 7.5 s) |

### [Evaluation Results]

### (Temperature Profile of Frozen MoS₂ Suspension during Irradiation with Microwaves)

FIG. 4 shows temperature profiles of the frozen MoS₂ suspensions during irradiation with microwaves in Experimental Examples A1 to A10. In the figure, reference numerals (1) to (10) are temperature profiles of the frozen MoS₂ suspensions in Experimental Examples A1 to A10, respectively.

From the results of FIG. 4, it can be seen that the temperature rise of the frozen MoS₂ suspension becomes more rapid as the microwave output increases and the irradiation time increases. In the intermittent irradiation, the number of cycles of rapid cooling and rapid heating increases as the irradiation time increases, and therefore, it is considered that the exfoliation progresses more and the production amount of the layered material nanosheet increases.

### (Observation of Particle Shape)

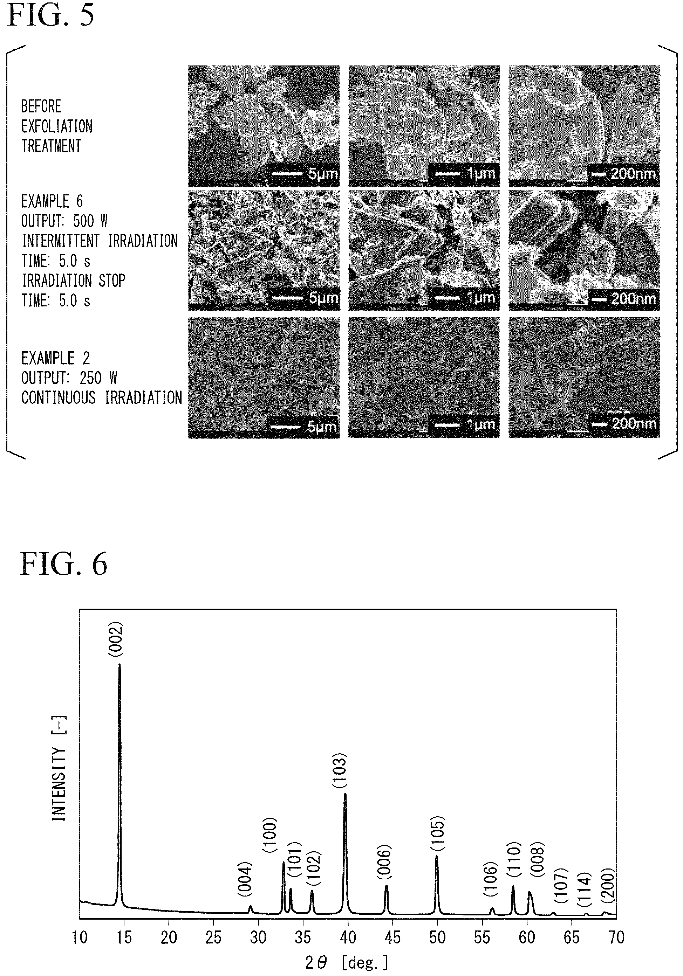

A surface shape of the MoS₂ nanosheet was observed using an FE-SEM (JSM-7610F, manufactured by JEOL). A sample for observation was prepared by dispersing a MoS₂ nanosheet in water, dropping several drops of the supernatant on a carbon-reinforced microgrid manufactured by Okenshoji Co., Ltd., and performing drying. FIG. 5 shows FE-SEM photographs of the MoS₂ nanosheets obtained in Experimental Example A2 and Experimental Example A6 and the MoS₂ particles before the exfoliation treatment.

From the FE-SEM photograph in FIG. 5, it was found that in the MoS₂ nanosheets obtained in Experimental Example A6 and Experimental Example A2, the surface was formed in a stepped shape as compared with the MoS₂ particles before the exfoliation treatment, and partial exfoliation of the unit layer progresses. In addition, in the MoS₂ nanosheet obtained in Experimental Example A6, a structure reflecting a crystal structure of MoS₂ and sheared at 60 degrees was observed. In addition, a large number of (001) planes were observed in the MoS₂ nanosheets obtained in Experimental Examples A2 and A6. This is considered to be because the exfoliation progresses and the sheet surface appears many times. From the above results, it is considered that the irradiation with microwaves acts on both exfoliation of the (001) plane and shearing of a (hk0) plane.

### (X-Ray Diffraction Pattern)

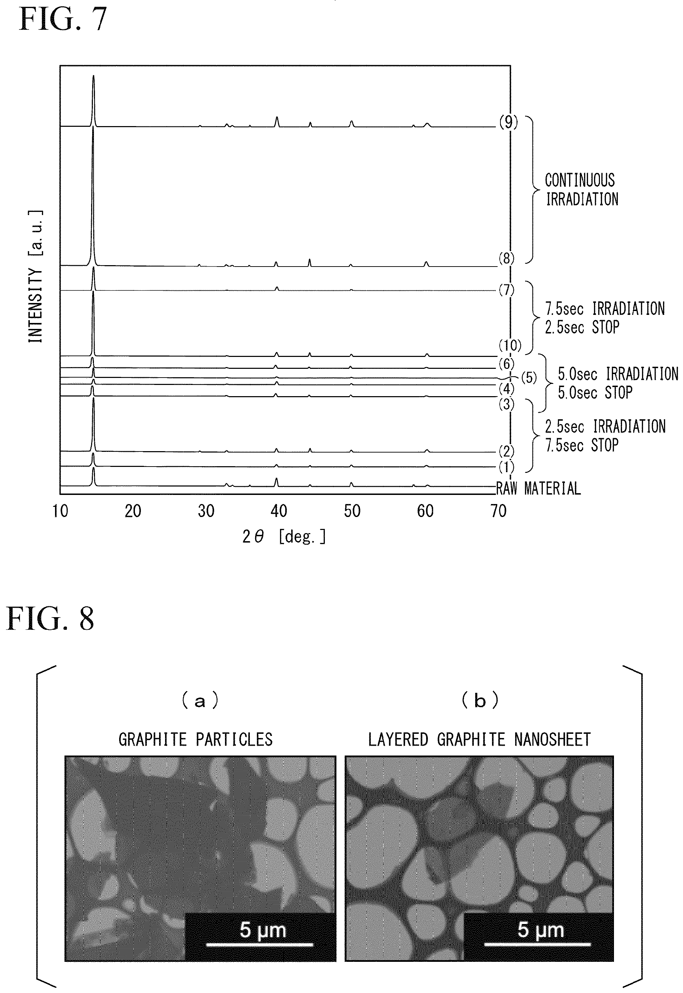

An X-ray diffraction pattern of the MoS₂ nanosheet was measured using a benchtop powder X-ray diffractometer (D2 PHASER2nd Gen, manufactured by Bruker) and using a CuKα ray as an X-ray source. FIG. 6 shows an X-ray diffraction pattern of MoS₂ particles before the exfoliation treatment, and FIG. 7 shows X-ray diffraction patterns of MoS₂ nanosheets obtained in Experimental Examples A1 to A10. In the figure, reference numerals (1) to (10) are temperature profiles of the frozen MoS₂ suspensions in Experimental Examples A1 to A10, respectively. The ratio I₀₀₂/I₁₀₃ of the X-ray diffraction peak intensity I₀₀₂ of the (002) plane to the X-ray diffraction peak intensity I₁₀₃ of the (103) plane of MoS₂ is shown in Table 2 below.

**[Table 2]**

| | I₀₀₂/I₁₀₃ |
|---|---|
| Experimental Example A1 | 4.79 |
| Experimental Example A2 | 24.95 |
| Experimental Example A3 | 4.92 |
| Experimental Example A4 | 12.51 |
| Experimental Example A5 | 3.43 |
| Experimental Example A6 | 6.59 |
| Experimental Example A7 | 1.86 |
| Experimental Example A8 | 2.03 |
| Experimental Example A9 | 12.41 |
| Experimental Example A10 | 6.51 |

From the X-ray diffraction patterns in FIGS. 6 and 7, no main shift of the X-ray diffraction peak was observed in the MoS₂ particles before the exfoliation treatment and the MoS₂ nanosheet after the exfoliation treatment. From this result, it was found that the crystal structure of MoS₂ was not changed by the exfoliation treatment.

On the other hand, regarding the peak intensity ratio I₀₀₂/I₁₀₃, a large difference was observed between the MoS₂ particles before the exfoliation treatment and the MoS₂ nanosheet after the exfoliation treatment. The peak intensity ratio I₀₀₂/I₁₀₃ of the MoS₂ particles before the exfoliation treatment was 2.021, whereas in Experimental Example A2 (output: 250 W, continuous irradiation), the peak intensity ratio was 24.987, which was about 12 times the peak intensity ratio before the exfoliation treatment. In addition, the peak intensity ratio was also greatly increased in Experimental Example A4 (output: 250 W, intermittent irradiation, irradiation time: 7.5 s, stop time: 2.5 s) and Experimental Example A9 (output: 500 W, intermittent irradiation, irradiation time: 7.5 s, stop time: 2.5 s). In Experimental Examples A2, A4, and A9 in which the peak intensity ratio I₀₀₂/I₁₀₃ significantly increased, the intensity of the X-ray diffraction peak of the (103) plane was low, and thus it is considered that the peak intensity increased when the number of unit layers forming the stacked structure decreased. In Experimental Examples A2, A4, and A9, the peak of the (001) plane was slightly observed, and the (hkl) plane was almost small. From this result, it is also considered that a large number of MoS₂ nanosheets having a thin layer structure were produced by the exfoliation treatment in Experimental Examples A2, A4, and A9.

### <Experimental Example B: Layered Graphite Nanosheet and Layered Expanded Graphite Nanosheet>

### [Experimental Example B1]

Into a plastic container (made of polypropylene) were charged 0.05 g of a graphite powder (average particle diameter: 15 µm, D/G ratio: 0.118, G/2D ratio: 2.289) and 50 mL of pure water, followed by dispersing by irradiation with ultrasonic waves (50 kHz, 100 W) for 3 minutes, and a graphite suspension having a concentration of 1 g/L was obtained. Next, a fiber optic thermometer was inserted into a central portion of the obtained graphite suspension, then the plastic container was placed in liquid nitrogen for 5 minutes to rapidly cool the graphite suspension, and a frozen graphite suspension was produced. Thereafter, as in Experimental Example A1, the plastic container containing the frozen graphite suspension and dry ice were placed in a propylene cooling container, and an outer periphery of the plastic container was surrounded by the dry ice.

The plastic container and the polypropylene cooling container were placed on a sample stage for microwave irradiation, and irradiation of the frozen graphite suspension with microwaves was started. The microwave irradiation conditions were as follows: output: 1000 W, intermittent irradiation, duty: 50%, pulse period: 10 s, and irradiation time: 30 mins. In this way, the graphite particles were subjected to an exfoliation treatment to produce a layered graphite nanosheet. The produced layered graphite nanosheet was collected by filtration with a filter.

The graphite powder as a raw material and the layered graphite nanosheet produced by irradiation with microwaves were observed using the FE-SEM. Transmission electron images (TE images) of the graphite powder and the layered graphite nanosheet captured by the FE-SEM are shown in FIG. 8. (a) of FIG. 8 is an FE-SEM image (TE image) of the graphite particles, and (b) of FIG. 8 is an FE-SEM image (TE image) of the layered graphite nanosheet.

From the results of FIG. 8, it can be seen that holes of the filter are seen through the layered graphite nanosheet as compared with the graphite particles. This is because thinning of the layered graphite nanosheet has progressed. It can also be seen that the layered graphite nanosheet is smaller in size than the graphite particles.

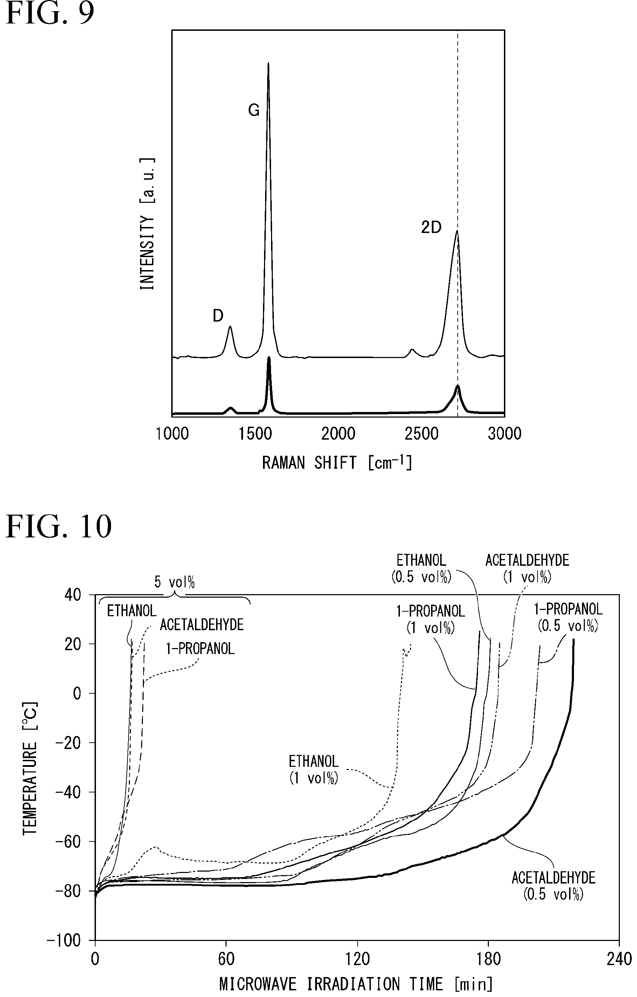

In addition, the Raman spectra of the graphite powder and the layered graphite nanosheet were measured. The results are shown in FIG. 9. In addition, a D/G ratio and G/2D ratio were measured based on the obtained Raman spectrum, and a rate of change in the D/G ratio and a rate of change in the G/2D ratio of the layered graphite nanosheet with respect to the graphite powder were determined. The results are shown in Table 3 below.

**[Table 3]**

| | D/G Ratio | | G/2D Ratio | |
|---|---|---|---|---|
| | Measurement value (-) | Rate of change (%) | Measurement value (-) | Rate of change (%) |
| Graphite powder | 0.118 | - | 2.289 | - |
| Experimental Example B1 | 0.175 | 48.3 | 1.828 | 20.1 |

From the results of Table 3, it can be seen that the rate of change in the D/G ratio of the layered graphite nanosheet with respect to the graphite powder as the raw material is 48.3%, and the rate of change in the G/2D ratio is 20.1%. The reason why the rate of change in the D/G ratio and the rate of change of the G/2D ratio show high values is that exfoliation and fragmentation of the graphite particles progress by the irradiation with the microwaves to produce the layered graphite nanosheet.

### [Experimental Examples B2 and B3]

Layered graphite nanosheets were obtained in the same manner as in Experimental Example B1 except that the pulse period of the microwave was changed to a pulse period shown in Table 4 below. The D/G ratio and the G/2D ratio of the obtained layered graphite nanosheet were measured, and the rate of change in the D/G and the rate of change in the G/2D ratio were determined. The results are shown in Table 4 below.

**[Table 4]**

| | Pulse period (s) | D/G Ratio | | G/2D Ratio | |
|---|---|---|---|---|---|
| | | Measurement value (-) | Rate of change (%) | Measurement value (-) | Rate of change (%) |
| Graphite powder | - | 0.118 | - | 2.289 | - |
| Experimental Example B2 | 2 | 0.183 | 55.1 | 1.980 | 13.5 |
| Experimental Example B3 | 6 | 0.218 | 84.7 | 1.943 | 15.1 |
| Experimental Example B1 | 10 | 0.175 | 48.3 | 1.828 | 20.1 |

From the results of Table 4, it can be seen that all the rates of change in the D/G ratio show a high value of 45% or more. This is considered to be because the exfoliation and fragmentation of the graphite particles progressed due to the irradiation with microwaves. In addition, it can be seen that the rate of change in the G/2D ratio increases as the pulse period increases. It is considered that this is because the graphite particles are locally heated as the pulse period increases, the temperature change during the cooling by the surrounding ice or dry ice increases, the thermal shock strongly acts on the graphite particles, and the exfoliation of the graphite particles easily progresses.

### [Experimental Examples B4 to B6]

A layered graphite nanosheet was obtained in the same manner as in Experimental Example B1 except that the graphite concentration of the graphite suspension was set to 3 g/L, and the output and the irradiation time of the microwaves were set to the output and the irradiation time shown in Table 5 below. The D/G ratio and G/2D ratio of the obtained layered graphite nanosheets were measured, and the rate of change in the D/G ratio and the rate of change in the G/2D ratio were determined. The results are shown in Table 5 below.

**[Table 5]**

| | Graphite concentration (g/L) | Output (W) | Irradiation time (min) | D/G Ratio | | G/2D Ratio | |
|---|---|---|---|---|---|---|---|
| | | | | Measurement value (-) | Rate of change (%) | Measurement value (-) | Rate of change (%) |
| Graphite powder | - | - | - | 0.118 | - | 2.289 | - |
| Experimental Example B4 | 3 | 500 | 84 | 0.119 | 0.8 | 2.479 | 8.3 |
| Experimental Example B5 | 3 | 800 | 30 | 0.123 | 4.2 | 2.360 | 3.1 |
| Experimental Example B6 | 3 | 1000 | 30 | 0.172 | 45.8 | 2.382 | 4.1 |

From the results of Table 5, it can be seen that the rate of change in the D/G ratio increases as the output of the microwaves increases. This is considered to be because the exfoliation and fragmentation of the graphite particles progress as the output of the microwaves increases. On the other hand, it can be seen that the rate of change in the G/2D ratio is less affected by the output of the microwaves.

### [Experimental Example B7]

Fifty milliliters of a graphite suspension having a graphite concentration of 3 g/L was dispersed by being irradiated with ultrasonic waves, and then frozen with liquid nitrogen. Next, the obtained frozen graphite suspension was irradiated with microwaves until the frozen graphite suspension was melted. The microwave irradiation conditions were as follows: output: 800 W, intermittent irradiation, duty: 50%, and pulse period: 10 s. A cycle in which this graphite suspension was dispersed by being irradiated with ultrasonic waves and then frozen with liquid nitrogen, and the obtained frozen graphite suspension was irradiated with microwaves until the frozen graphite suspension was melted was repeated once, twice, or three times, and the D/G ratio and the G/2D ratio of the obtained layered graphite nanosheet were measured to determine the rate of change in the D/G ratio and the rate of change in the G/2D ratio. The results are shown in Table 6 below.

**[Table 6]**

| | Graphite concentration (g/L) | Output (W) | Cycle (number of times) | D/G Ratio | | G/2D Ratio | |
|---|---|---|---|---|---|---|---|
| | | | | Measurement value (-) | Rate of change (%) | Measurement value (-) | Rate of change (%) |
| Graphite powder | - | - | - | 0.118 | - | 2.289 | - |
| Experimental Example B7 | 3 | 800 | 1 | 0.153 | 29.7 | 2.347 | 2.5 |
| | 3 | 800 | 2 | 0.135 | 14.4 | 2.225 | 2.8 |
| | 3 | 800 | 3 | 0.127 | 7.6 | 2.209 | 3.5 |

From the results of Table 6, it can be seen that the rate of change in the D/G ratio decreases as the number of cycles increases. This is considered to be because the influence of structure defects is reduced. On the other hand, it can be seen that the rate of change in the G/2D ratio increases as the number of cycles increases. It is considered that this is because the frequency of application of thermal shock was increased by increasing the number of microwave irradiation cycles, leading to the progression of exfoliation.

### [Experimental Examples B8 to B10]

Layered expanded graphite nanosheets were obtained in the same manner as in Experimental Example B1 except that an expanded graphite powder (D/G ratio: 0.089, G/2D ratio: 2.2193) was used instead of the graphite powder, and the output of the microwaves was changed to the output shown in Table 7 below. The D/G ratio and G/2D ratio of the obtained layered graphite nanosheets were measured, and the rate of change in the D/G ratio and the rate of change in the G/2D ratio were determined. The results are shown in Table 7 below.

**[Table 7]**

| | Output (W) | D/G Ratio | | G/2D Ratio | |
|---|---|---|---|---|---|
| | | Measurement value (-) | Rate of change (%) | Measurement value (-) | Rate of change (%) |
| Expanded graphite powder | - | 0.089 | - | 2.193 | - |
| Experimental Example B8 | 200 | 0.107 | 20.2 | 2.264 | 3.2 |
| Experimental Example B9 | 500 | 0.106 | 19.1 | 2.217 | 1.1 |
| Experimental Example B10 | 800 | 0.123 | 38.2 | 2.161 | 1.5 |

From the results of Table 7, it can be seen that the rate of change in the D/G ratio increases as the output of the microwaves increases. This is considered to be because the exfoliation and fragmentation of the expanded graphite particles progress as the output of the microwaves increases. On the other hand, it can be seen that the rate of change in the G/2D ratio is less affected by the output of the microwaves.

### <Experimental Example C: Layered Graphite Nanosheet>

### [Experimental Example C1]

Into a plastic container (made of polypropylene) having a capacity of 100 mL were charged 0.05 g of a graphite powder (average particle diameter: 15 µm, D/G ratio: 0.037, G/2D ratio: 2.606) different from that used in Experimental Example B1 and 50 mL of 1-propanol aqueous solution having a concentration of 0.5 vol% as a dispersion medium, and a mixed solution was obtained. Next, in order to disperse the graphite powder in the mixed solution, the mixed solution was stirred at a stirring speed of 400 rpm. Thereafter, liquid nitrogen was added to the mixed solution for 2 minutes, followed by cooling. Next, a sack was fixed at a position of 1.5 cm from a bottom of an inside of the plastic container, and liquid nitrogen was charged into the mixed solution through the sack for 10 minutes to freeze the mixed solution, thereby obtaining a frozen liquid in which graphite powder was dispersed. The plastic container (capacity: 100 mL) containing the frozen liquid was placed in a plastic container (made of polypropylene) having a capacity of 250 mL, and dry ice was filled around the plastic container. After a fiber optic thermometer was inserted into the frozen liquid in the plastic container, the frozen liquid was irradiated with microwaves (100 W) until the fiber optic thermometer showed 20°C, and the frozen liquid was dissolved to obtain a solution. Next, the plastic container (capacity: 100 mL) was placed in a thermostatic bath (temperature: 60°C) from the plastic container having a capacity of 250 mL, and the solution in the plastic container in the thermostatic bath was centrifuged at a rotation speed of 2000 rpm for 2 minutes to collect the graphite powder after the irradiation with microwaves.

### [Experimental Examples C2 to C9]

A frozen liquid in which graphite powder was dispersed was irradiated with microwaves (100 W) until a fiber optic thermometer showed 20°C in the same manner as in Experimental Example C1 except that an aqueous solution containing an organic solvent shown in Table 8 below at an organic solvent concentration shown in Table 8 was used as a dispersion medium.

### (Temperature Change of Frozen Liquid)

A temperature change of the frozen liquid from the irradiation with microwaves until a fiber optic thermometer showed 20°C was measured. The results are shown in FIG. 10. From the results of FIG. 10, it can be seen that in the same organic solvent, as the concentration of the organic solvent increases, the temperature change time until 20°C is shown is shortened. In addition, when the organic solvent concentration is 0.5 vol% and 1.0 vol%, it can be seen that in the case of ethanol, the temperature change time until 20°C is shown is shorter than that in the cases of 1-propanol and acetaldehyde, and the frozen liquid tends to be easily heated.

### (Raman Spectrum of Graphite Powder after Irradiation with Microwaves)

The Raman spectrum of the graphite powder after irradiation with microwaves was measured. The results are shown in Table 8 below.

**[Table 8]**

| | Dispersion medium | | D/G Ratio | | G/2D Ratio | |
|---|---|---|---|---|---|---|
| | Organic solvent | Concentration of organic solvent (vol%) | Measuremen t value (-) | Rate of change (%) | Measuremen t value (-) | Rate of change (%) |
| Experimental Example C1 | 1-Propanol | 0.5 | 0.063 | 40.1 | 2.584 | -0.8 |
| Experimental Example C2 | 1-Propanol | 1.0 | 0.051 | 26.4 | 2.402 | -7.8 |
| Experimental Example C3 | 1-Propanol | 5.0 | 0.084 | 55.5 | 2.431 | -6.7 |
| Experimental Example C4 | Ethanol | 0.5 | 0.052 | 27.5 | 2.583 | -0.9 |
| Experimental Example C5 | Ethanol | 1.0 | 0.075 | 50.2 | 2.625 | 0.7 |
| Experimental Example C6 | Ethanol | 5.0 | 0.043 | 12.6 | 2.382 | -8.6 |
| Experimental Example C7 | Acetaldehyde | 0.5 | 0.042 | 11.7 | 2.690 | 3.2 |
| Experimental Example C8 | Acetaldehyde | 1.0 | 0.089 | 57.9 | 2.552 | -2.1 |
| Experimental Example C9 | Acetaldehyde | 5.0 | 0.090 | 58.1 | 2.301 | -11.7 |
| Graphite powder | - | - | 0.037 | - | 2.606 | - |

From the results of Table 8, it was found that the graphite powder after the irradiation with microwaves of Experimental Examples C1 to C9 had a large rate of change in the D/G ratio and the G/2D ratio, and thus exfoliation of the graphite powder progressed by the irradiation with the microwaves. In particular, it was found that when aqueous solutions having a 1-propanol concentration of 1.0 vol% and 5.0 vol%, an aqueous solution having an ethanol concentration of 5.0 vol%, and an aqueous solution having an acetaldehyde concentration of 1.0 vol% and 5.0 vol% are used, at least one of the rate of changes in the D/G ratio and the G/2D ratio increases.

### [Experimental Examples C10 to C16]

A frozen liquid was irradiated with the microwaves until a fiber optic thermometer showed 20°C in the same manner as in Experimental Example C1 except that an aqueous solution containing an organic solvent shown in Table 9 below at an organic solvent concentration shown in Table 9 was used as the dispersion medium and the output of the microwaves emitted to the frozen liquid was set to 200 W.

### (Temperature Change of Frozen Liquid)

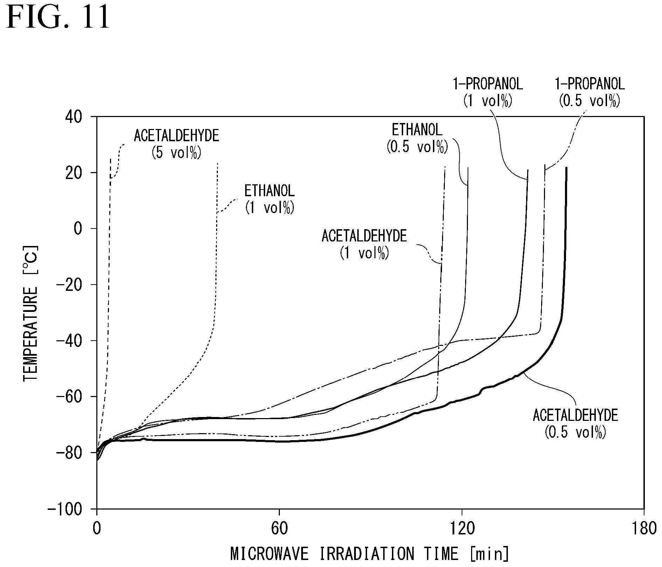

A temperature change of the frozen liquid from the irradiation with microwaves until a fiber optic thermometer showed 20°C was measured. Results are shown in FIG. 11. From the results of FIG. 11, it can be seen that in the same organic solvent, as the concentration of the organic solvent increases, the temperature change time until 20°C is shown is shortened.

### (Raman Spectrum of Graphite Powder after Irradiation with Microwaves)

The Raman spectrum of the graphite powder after irradiation with microwaves was measured. The results are shown in Table 9 below.

**[Table 9]**

| | Dispersion medium | | D/G Ratio | | G/2D Ratio | |
|---|---|---|---|---|---|---|
| | Organic solvent | Concentration of organic solvent (vol%) | Measurement value (-) | Rate of change (%) | Measuremen t value (-) | Rate of change (%) |
| Experimental Example C10 | 1-Propanol | 0.5 | 0.089 | 57.7 | 2.648 | 1.6 |
| Experimental Example C11 | 1-Propanol | 1.0 | 0.250 | 85.0 | 2.656 | 1.9 |
| Experimental Example C12 | Ethanol | 0.5 | 0.143 | 73.9 | 2.445 | -6.2 |
| Experimental Example C13 | Ethanol | 1.0 | 0.119 | 68.5 | 2.176 | -16.5 |
| Experimental Example C14 | Acetaldehyde | 0.5 | 0.073 | 48.9 | 2.501 | -4.0 |
| Experimental Example C15 | Acetaldehyde | 1.0 | 0.143 | 73.8 | 2.254 | -13.5 |
| Experimental Example C16 | Acetaldehyde | 5.0 | 0.151 | 75.2 | 2.576 | -1.2 |
| Graphite powder | - | - | 0.037 | - | 2.606 | - |

From the results of Table 9, the graphite powders after irradiation with microwaves of Experimental Examples C10 to C16 had a rate of change in the D/G ratio larger than Experimental Examples C1 and C2, C4 and C5, and C7 to C9 using the same dispersion medium. It is considered that this is because shearing occurred simultaneously with exfoliation by greatly heating graphite when the output of the microwaves was increased to 200 W.

The organic solvents (1-propanol, ethanol, and acetaldehyde) used in Experimental Examples C1 to C16 have high reducibility. Therefore, it is presumed that hydrogen is generated by an oxidation-reduction reaction between water and an organic solvent during irradiation with microwaves, and there is a possibility that the space between layers of graphite is easily spread by the hydrogen.

### Reference Signs List

- 10: layered material nanosheet
- 11: unit layer
- 12,: 13 surface
- 20: reaction device
- 21: layered material particle
- 22: polar solvent
- 23: frozen suspension
- 24: reaction vessel
- 25: lid
- 26: fiber optic thermometer
- 27: coolant
- 28: cooler
- 30: reaction device
- 37: coolant
- 38: circulating cooler

## Claims

1. A layered material nanosheet production method comprising:
an exfoliation step of exfoliating layered material particles in layers by irradiating the layered material particles with a microwave while cooling the layered material particles.

2. The layered material nanosheet production method according to claim 1, further comprising:
a dispersion step of dispersing the layered material particles in a polar solvent, wherein
in the exfoliation step, the layered material particles are irradiated with the microwave while cooling the layered material particles by solidifying the polar solvent, thereby exfoliating the layered material particles in layers.

3. The layered material nanosheet production method according to claim 1, further comprising:
a dispersion step of dispersing the layered material particles in a nonpolar solvent, wherein
in the exfoliation step, the layered material particles are irradiated with the microwave while cooling the layered material particles by cooling the nonpolar solvent to 10°C or lower, thereby exfoliating the layered material particles in layers.

4. The layered material nanosheet production method according to any one of claims 1 to 3, wherein
the layered material particles are intermittently irradiated with the microwave.

5. The layered material nanosheet production method according to any one of claims 1 to 3, wherein
the layered material particles include at least one particle selected from the group consisting of transition metal chalcogenide particles, molybdenum tungsten particles, and layered carbon particles.

6. The layered material nanosheet production method according to any one of claims 1 to 3, wherein
the layered material particle has a cleavage surface, and a major axis of the cleavage surface is 10 µm or more.

7. A layered MoS₂ nanosheet comprising:
MoS₂, wherein
a ratio I₀₀₂/I₁₀₃ of an X-ray diffraction peak intensity I₀₀₂ of a (002) plane to an X-ray diffraction peak intensity I₁₀₃ of a (103) plane of the MoS₂ is 5 or more.

8. A layered graphite nanosheet obtained by exfoliating layered carbon particles in layers, wherein
a rate of change in a D/G ratio, which is a ratio of an intensity D of a D band to an intensity G of a G band in a Raman spectrum, is 5% or more, as calculated according to the following formula (1): rate of change in D/G ratio = {absolute value of (D/G ratio of layered carbon particles - D/G ratio of layered graphite nanosheet)/D/G ratio of layered carbon particles} × 100 (1).

9. A layered graphite nanosheet obtained by exfoliating layered carbon particles in layers, wherein
a rate of change in a G/2D ratio, which is a ratio of an intensity G of a G band to an intensity 2D of a 2D band in a Raman spectrum, is 2% or more, as calculated according to the following formula (2): rate of change in G/2D ratio = {absolute value of (D/G ratio of layered carbon particles - D/G ratio of layered graphite nanosheet)/D/G ratio of layered carbon particles} × 100 (2).
